# EUROPEAN PATENT SPECIFICATION

(11) **EP 3 161 015 B1**
(45) Date of publication and mention of the grant of the patent: **06.03.2019**
(21) Application number: 15728902.6
(22) Date of filing: 17.06.2015
(51) Int. Cl.: C08F 2/00, C08L 23/08, C08L 23/16, C08L 23/06

(54) **ETHYLENE POLYMER COMPOSITION HAVING IMPROVED TENSILE PROPERTIES**
ETHYLENPOLYMER-ZUSAMMENSETZUNG MIT VERBESSERTER ZUGFESTIGKEIT
COMPOSITION DE POLYMÈRE D'ÉTHYLÈNE AYANT DES PROPRIÉTÉS DE TRACTION AMÉLIORÉES

(30) Priority: 25.06.2014 EP 14173890
(43) Date of publication of application: 03.05.2017
(73) Proprietor: Basell Polyolefine GmbH, 50389 Wesseling (DE)
(72) Inventor: CAVALIERI, Claudio, I-44122 Ferrara (IT); GRAZZI, Michele, I-44122 Ferrara (IT); PANTALEONI, Roberto, I-44122 Ferrara (IT)
(74) Representative: Gaverini, Gaetano Luigi Attilio
(86) International application number: PCT/EP2015/063625
(87) International publication number: WO 2015/197454

(56) References cited:
- US-A1- 2010 152 383
- US-A1- 2013 029 125
- US-A1- 2013 209 774

## Description

### FIELD OF THE INVENTION

The present disclosure relates to an ethylene polymer composition and to its use in applications where high tensile properties are required, like cable covering and plastic car parts, for instance.

### BACKGROUND OF THE INVENTION

It is known that the mechanical properties of ethylene polymers, in particular high density polyethylene (HDPE), can be improved by addition of ethylene/propylene highly amorphous copolymers (EPR).

For many uses of the so obtained compositions, as for instance for cable coating and plastic car parts, like panels, it is often required to add also fillers and other additives, in particular flame retardant additives.

It is of great importance for these compositions to have the highest possible tensile properties, even more when large amounts of fillers/additives are present, to avoid excessive deformation, thinning and failure under tensile stresses.

In answer to such need, it has now been found that enhanced tensile properties are achieved by properly selecting the complex shear viscosity value of specific blends of ethylene polymers.

In particular, the ethylene polymer composition of the present invention allows to obtain an unusually favorable balance of tensile strength at break, elongation at break and compression set, while still maintaining good thermoplastic properties.

### SUMMARY OF THE INVENTION

Thus the present invention provides an ethylene polymer composition having an eta (0.01) equal to or higher than 35,000 Pa.s, preferably equal to or higher than 40,000 Pa.s, more preferably equal to or higher than 50,000 Pa.s, and comprising, all per cent amounts being by weight:
A) 25-75%, preferably 30-70%, of an ethylene polymer selected from (A₁) ethylene homopolymers, (A₂) copolymers of ethylene with one or more olefin comonomers, wherein the comonomer content is of 10% or less, in particular from 1 to 9%, with respect to the weight of the copolymer, and mixtures of homopolymers (A₁) and copolymes (A₂);
B) 25-75%, preferably 30-70%, of a copolymer of ethylene and propylene containing from 45% to 70%, preferably from 50% to 70%, of ethylene;
wherein eta (0.01) is the complex shear viscosity at an angular frequency of 0.01 rad/s, measured with dynamic oscillatory shear in a plate-plate rotational rheometer at a temperature of 200°C, and the amounts of A) and B) are referred to the total weight of A) + B).

### DETAILED DESCRIPTION OF THE INVENTION

In general, the term "copolymer" is meant to include also polymers containing more than one kind of comonomers, such as terpolymers.

The upper limit of eta (0.01) for the ethylene polymer composition of the invention is preferably of 150,000 Pa.s.

Such upper limit applies to all the lower limits specified above.

The above defined copolymers (A₂) are preferably copolymers of ethylene with one or more comonomers selected from olefins having formula CH₂=CHR wherein R is an alkyl radical, linear or branched, having from 1 to 10 carbon atoms.

Specific examples of said olefins are propylene, butene-1, pentene-1, 4-methylpentene-1, hexene-1, octene-1 and decene-1.

Preferably the ethylene polymer A) has a density of from 0.920 to 0.960 g/cm³, more preferably from 0.925 to 0.955 g/cm³, most preferably from 0.925 to 0.945 g/cm³, determined according to ISO 1183 at 23°C.

The component B) in the ethylene polymer composition of the present invention is an ethylene copolymer containing a rather high amount of propylene, thus less crystalline than component A).

The ethylene polymer composition of the present invention preferably has a melting peak at a temperature Tm of 120°C or higher, in particular from 120°C to 130°C, measured by Differential Scanning Calorimetry with a heating rate of 20°C per minute.

The melt flow rate (MFR) of the ethylene polymer composition is preferably from 0.1 to 3 g/10 min., more preferably from 0.1 to 2 g/10 min., determined according to ISO 1133 at 230°C with a load of 2.16 kg.

The value of eta (100), which is the complex shear viscosity at an angular frequency of 100 rad/s, measured with dynamic oscillatory shear in a plate-plate rotational rheometer at a temperature of 200°C, is preferably from 1,200 to 2,500 Pa.s.

The flexural modulus value for the ethylene polymer composition of the present invention is preferably from 70 to 250 MPa.

The total ethylene content in the ethylene polymer composition of the present invention, determined on the total amount of A) + B), is preferably of 65% - 88% by weight, more preferably of 70 - 85% by weight.

In a preferred embodiment of the present invention, the ethylene polymer composition having the above defined features is obtained by reacting:
I) a precursor ethylene polymer composition comprising the same components A) and B) as above defined in the above said proportions, but having an eta (0.01) value of lower than 35,000 Pa.s, in particular from 5,000 to 34,000; and
II) a radical initiator.

Such precursor ethylene polymer composition can be prepared by melt blending the components A) and B) using commonly known techniques, like for example melt extrusion, but can also be prepared in the form of reactor blend with a multi-stage polymerization process.

There is no need of reacting separately each one of components A) and B) with the radical initiator.

Thus the ethylene polymer composition of the present invention can be obtained by an efficient process, comprising the following stages:
i) preparing the previously said precursor ethylene polymer composition by polymerizing the monomers in at least two sequential steps, wherein components A) and B) are prepared in sequential steps, operating in each step in the presence of the polymer formed and the catalyst used in the preceding step;
ii) subjecting the precursor composition obtained in i) to reaction with a radical initiator.

From the preceding description it should be clear that in the precursor composition the comonomer content and relative amounts of components A) and B) are the same as in the final composition (after reaction with the radical initiator). The reaction with the radical initiator has the effect of increasing the eta (0.01) value of the composition.

Preferably, in the precursor ethylene polymer composition, the component A) contains 10% or less, more preferably 8% or less, in particular 6% or less, referred to the weight of A), of a fraction XS_{A} soluble in xylene at 25°C, and/or the component B) contains 60% or more, more preferably 65% or more, referred to the weight of B), of a fraction XS_{B} soluble in xylene at 25°C.

The upper limit of XS_{B} content in component B) of the precursor ethylene polymer composition is preferably of 90% by weight.

Such upper limit applies to all the lower limits specified above.

Preferably the intrinsic viscosity [η] of the XS_{B} fraction in the precursor ethylene polymer composition is of 2 dl/g or more, in particular from 2 to 3.5 dl/g.

Moreover, the precursor ethylene polymer composition can preferably have at least one of the following additional features:
- a eta (100) value from 1,200 to 2,500 Pa.s;
- a MFR value, determined according to ISO 1133 at 230°C with a load of 2.16 kg, of 0.3 to 5 g/10 min., more preferably from 0.5 to 3 g/10 min.;
- a density of the ethylene polymer A) of from 0.920 to 0.960 g/cm³, more preferably from 0.925 to 0.955 g/cm³, most preferably from 0.925 to 0.945 g/cm³, determined according to ISO 1183 at 23°C;
- a melting peak at a temperature Tm of 120°C or higher, in particular from 120°C to 130°C, measured by Differential Scanning Calorimetry with a heating rate of 20°C per minute;
- a MFR value of the ethylene polymer A), determined according to ISO 1133 at 230°C with a load of 2.16 kg, of from 1 to 15 g/10 min.;
- an amount of total fraction XS_{TOT} soluble in xylene at 25°C, determined by extraction carried out on the total amount of A) + B), of 25% - 60% by weight, preferably of 30 - 55% by weight;
- an intrinsic viscosity [η] of the XS_{TOT} fraction of 1.8 dl/g or more, in particular from 1.8 to 3.2 dl/g;
- a fusion enthalpy ΔH_{fus}, measured by Differential Scanning Calorimetry with a heating rate of 20°C per minute, of 60 J/g or more, in particular from 60 to 95 J/g.

All the said [η] values are measured in tetrahydronaphthalene at 135 °C.

While no necessary limitation is known to exist in principle on the kind of polymerization process and catalysts to be used for preparing the precursor polyethylene composition, it has been found, as previously mentioned, that it can be prepared by a sequential polymerization, comprising at least two sequential steps, wherein components A) and B) are prepared in separate subsequent steps, operating in each step, except the first step, in the presence of the polymer formed and the catalyst used in the preceding step. The catalyst is added only in the first step, however its activity is such that it is still active for all the subsequent steps.

The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The said polymerizations are preferably carried out in the presence of a Ziegler-Natta catalyst. Typically a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on MgCl₂.

Particularly preferred catalysts comprise the product of the reaction of said organometallic compound of group 1, 2 or 13 of the Periodic Table of elements, with a solid catalyst component comprising a Ti compound and an electron donor compound supported on MgCl₂.

Preferred organometallic compounds are the aluminum alkyl compounds.

Thus in a preferred embodiment, the precursor ethylene polymer composition of the present invention is obtainable by using a Ziegler-Natta polymerization catalyst, more preferably a Ziegler-Natta catalyst supported on MgCl₂, even more preferably a Ziegler-Natta catalyst comprising the product of reaction of:
1) a solid catalyst component comprising a Ti compound and an electron donor (internal electron-donor) supported on MgCl₂;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Suitable succinic acid esters are represented by the formula (I): 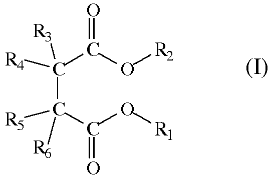 wherein the radicals R₁ and R₂, equal to or different from each other, are a C₁-C₂₀ linear or branched alkyl, alkenyl, cycloalkyl, aryl, arylalkyl or alkylaryl group, optionally containing heteroatoms; the radicals R₃ to R₆ equal to or different from each other, are hydrogen or a C₁-C₂₀ linear or branched alkyl, alkenyl, cycloalkyl, aryl, arylalkyl or alkylaryl group, optionally containing heteroatoms, and the radicals R₃ to R₆ which are joined to the same carbon atom can be linked together to form a cycle.

R₁ and R₂ are preferably C₁-C₈ alkyl, cycloalkyl, aryl, arylalkyl and alkylaryl groups. Particularly preferred are the compounds in which R₁ and R₂ are selected from primary alkyls and in particular branched primary alkyls. Examples of suitable R₁ and R₂ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which R₃ to R₅ are hydrogen and R₆ is a branched alkyl, cycloalkyl, aryl, arylalkyl and alkylaryl radical having from 3 to 10 carbon atoms. Another preferred group of compounds within those of formula (I) is that in which at least two radicals from R₃ to R₆ are different from hydrogen and are selected from C₁-C₂₀ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is R₃ and R₅ or R₄ and R₆ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula R¹ₐR²_{b}Si(OR³)_{c}, where a and b are integer numbers from 0 to 2, c is an integer from 1 to 3 and the sum (a+b+c) is 4; R¹, R² and R³ are alkyl, cycloalkyl or aryl radicals with 1-18 carbon atoms optionally containing heteroatoms.

Useful examples of silicon compounds are (tert-butyl)₂Si(OCH₃)₂, (cyclohexyl)(methyl)Si (OCH₃)₂, (phenyl)₂Si(OCH₃)₂ and (cyclopentyl)₂Si(OCH₃)₂.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

As previously explained, the precursor ethylene polymer composition is then reacted with a radical initiator to achieve the desired eta (0.01) value.

The said radical initiator is preferably selected from organic peroxides.

Particularly useful organic peroxides are the peroxydicarbonates.

The peroxydicarbonates are generally used in the art to enhance the melt strength of propylene polymers, as explained for instance in EP0384431 and WO9927007.

Suitable peroxydicarbonates are the compounds of formula

R^{I}-OC(O)OOC(O)O-R^{II}

wherein R^{I} and R^{II} are independently selected from C₁-C₂₀ saturated or unsaturated hydrocarbon radicals, linear or branched, optionally containing heteroatoms, in particular O and/or N.

A particularly preferred example is dicetyl peroxydicarbonate, in which R^{I} and R^{II} are both hexadecyl radicals.

Other specific examples are dimyristyl peroxydicarbonate, diisopropyl peroxydicarbonate; di-n-butyl peroxydicarbonate; di-sec-butyl peroxydicarbonate; bis (2-ethylhexyl) peroxydicarbonate; bis (4-tert-butylcyclohexyl) peroxydicarbonate.

The reaction with the radical initiator can be carried out by any means and under the conditions known in the art to be effective for radical initiated reactions in olefin polymers.

In particular it is known that such reactions can be run in the conventional apparatuses generally used for processing polymers in the molten state, like in particular single or twin screw extruders. It is preferred to operate under inert atmosphere, for instance under nitrogen.

The amount of radical initiator to be added to the precursor composition can be easily determined by one skilled in the art, based upon the eta (0.01) value of the precursor composition and the desired eta (0.01) final value. Generally such amount is comprised in the range of from 0.1 to 1% by weight with respect to the total weight of the precursor composition and of the radical initiator.

The reaction temperature is preferably in the range of from 180 to 300 °C.

The ethylene polymer composition of the present invention can also contain additives commonly employed in the art, such as antioxidants, light stabilizers, heat stabilizers, colorants and fillers.

The present invention also provides final articles, in particular extruded articles, like cable covering and plastic car parts (panels) made of or comprising the said polyolefin composition.

### EXAMPLES

The practice and advantages of the various embodiments, compositions and methods as provided herein are disclosed below in the following examples. These Examples are illustrative only, and are not intended to limit the scope of the invention in any manner whatsoever.

The following analytical methods are used to characterize the polymer compositions.

### Complex shear viscosity

Measured at angular frequency of 0.01 rad/s and 200°C as follows.

Samples are melt-pressed for 4 min under 200 °C and 200 bar into plates of 1mm thickness. Disc specimens of a diameter of 25 mm are stamped and inserted in the rheometer, which is preheated at 200 °C. The measurement can be performed using any rotational rheometer commercially available. Here the Anton Paar MCR 300 is utilized, with a plate-plate geometry. A so-called frequency-sweep is performed (after 4 min of annealing the sample at the measurement temperature) at T = 200 °C, under constant strain-amplitude of 5%, measuring and analyzing the stress response of the material in the range of excitation frequencies ω from 670 to 0.02 rad/s. The standardized basic software is utilized to calculate the rheological properties, i.e. the storage-modulus, G', the loss-modulus, G", the phase lag δ (=arctan(G"/G')) and the complex viscosity, η*, as a function of the applied frequency, namely η* (ω) = [G'(ω)² + G" (ω)²]^{1/2} /ω. The value of the latter at an applied frequency ω of 0.01 rad/s is the eta (0.01).

The value of the latter at an applied frequency ω of 100 rad/s is the eta (100).

### Propylene or butene-1 content determined via I.R. Spectroscopy

The following measurements are used to calculate the propylene content:
a) Area (ANIR) of the combination absorption bands between 4482 and 3950 cm⁻¹ which is used for spectrometric normalization of film thickness.
b) Area (A971) of the absorption band due to propylene sequences in the range 986-952 cm⁻¹, omitting area beneath a baseline drawn between the endpoints.

The ratio A971 / ANIR is calibrated by analyzing copolymers of known compositions, determined by NMR spectroscopy.

The following measurements are used to calculate the butene-1 content:
Area (ANIR) of the combination absorption bands between 4482 and 3950 cm⁻¹ which is used for spectrometric normalization of film thickness.
Area (Ac4) of the absorption band due to ethyl branches from 1-butene units in the range 781-750 cm⁻¹ , omitting area beneath a baseline drawn between the endpoints.

The ratio Ac4 / ANIR is calibrated by analyzing copolymers of known compositions, determined by NMR spectroscopy.

### Density

Determined according to ISO 1183 at 23°C.

### Melt Flow Rate

Measured according to ISO 1133 at 230°C with a load of 2.16 kg, unless otherwise specified.

### Melting temperature (ISO 11357-3)

Determined by differential scanning calorimetry (DSC). A sample weighting 6 ± 1 mg is heated to 200 ± 1° C at a rate of 20 °C/min and kept at 200 ± 1° C for 2 minutes in nitrogen stream and is thereafter cooled at a rate of 20° C/min to 40 ± 2° C, thereby kept at this temperature for 2 min to crystallise the sample. Then, the sample is again melted at a temperature rise rate of 20° C/min up to 200° C ± 1. The melting scan is recorded, a thermogram is obtained, and, from this, temperatures corresponding to peaks are read. The temperature corresponding to the most intense melting peak recorded during the second fusion is taken as the melting temperature. The fusion enthalpy ΔH_{fus} is measured on said most intense melting peak. Obviously, if only one peak is detected, both melting temperature and ΔH_{fus} are provided by (i.e. measured on) such peak. To determine fusion enthalpy AH_{fus}, construct the base-line by connecting the two closest points at which the melting endotherm peak deviate from the baseline. The heat of fusion (ΔH_{fus}) is then calculated by integrating the area between DSC heat flow recorded signal and constructed baseline.

### Xylene soluble fraction

2.5 g of polymer and 250 cm³ of o-xylene are introduced in a glass flask equipped with a refrigerator and a magnetical stirrer. The temperature is raised in 30 minutes from room temperature up to the boiling point of the solvent (135°C). The so obtained clear solution is then kept under reflux and stirring for further 30 minutes. The closed flask is then kept in a thermostatic water bath at 25 °C for 30 minutes as well so that the crystallization of the insoluble (XI) part of the sample takes place. The so formed solid is filtered on quick filtering paper. 100 cm³ of the filtered liquid is poured in a previously weighed aluminum container which is heated on a heating plate under nitrogen flow, to remove the solvent by evaporation. The container is then kept in an oven at 80 °C under vacuum to dryness and then weighed after constant weight is obtained.

Thus one calculates the percent by weight of polymer soluble and insoluble in xylene at 25 °C.

### [η] intrinsic viscosity

The sample is dissolved in tetrahydronaphthalene at 135 °C and then is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L.,J. Am. Chem. Soc., 1942, 64, 2716) provided that the flow time of the pure solvent is known at the same experimental conditions (same viscometer and same temperature). One single polymer solution is used to determine [η].
Flexural Modulus*: ISO 178, measured 24 hours after moulding.
Tensile strength at break*: ISO 527-2, measured 24 hours after moulding.
Elongation at break*: ISO 527-2, measured 24 hours after moulding.
Note: *Test specimens prepared by compression moulding according to ISO 1873-2: 1989.
Compression set: ISO 815-1:2008 Part 1.

### Examples 1 and 2 (reference): preparation of the precursor ethylene polymer composition

The solid catalyst component used in polymerization is a titanium-containing Ziegler-Natta catalyst component supported on magnesium chloride, prepared with the procedure described in EP 395083, Example 3, according to which diisobutyl phthalate is used as the internal donor compound.

### CATALYST SYSTEM AND PREPOLYMERIZATION TREATMENT

Before introducing it into the polymerization reactors, the solid catalyst component described above is contacted at 13 °C for 10 minutes with aluminum triethyl (TEAL) and dicyclopentyldimethoxysilane (DCPMS), in a TEAL/DCPMS weight ratio equal to about 13 (Example 1) or 15 (Example 2) and in such quantity that the TEAL/solid catalyst component weight ratio be equal to 5 (Example 1) or 5.5 (Example 2).

The catalyst system is then subjected to prepolymerization by maintaining it in suspension in liquid propylene at 50 °C for about 65 minutes before introducing it into the first polymerization reactor.

### POLYMERIZATION

The polymerization is carried out in continuous in a series of two gas-phase reactors equipped with devices to transfer the product from the first reactor to the second one.

Into the first gas phase polymerization reactor an ethylene/propylene/butene-1 copolymer (component A)) is produced by feeding in a continuous and constant flow the prepolymerized catalyst system, hydrogen (used as molecular weight regulator), ethylene, propylene and butene-1 in the gas state.

The ethylene polymer coming from the first reactor is discharged in a continuous flow and, after having been purged of unreacted monomers, is introduced, in a continuous flow, into the second gas phase reactor, together with quantitatively constant flows of hydrogen, ethylene and propylene in the gas state.

In the second reactor an ethylene/propylene copolymer (component B)) is produced. Polymerization conditions, molar ratios of the reactants and composition of the copolymers obtained are shown in Table I.

The polymer particles exiting the second reactor, which constitute the not stabilized precursor ethylene polymer composition according to the present invention, are subjected to a steam treatment to remove the reactive monomers and volatile substances, and then dried.

Then the polymer particles are mixed with a usual stabilizing additive composition in a twin screw extruder Berstorff ZE 25 (length/diameter ratio of screws: 33) and extruded under nitrogen atmosphere in the following conditions:

| | |
|---|---|
| Rotation speed: | 250 rpm; |
| Extruder output: | 15 kg/hour; |
| Melt temperature: | 280-290 °C. |

The stabilizing additive composition is made of the following components:
- 0.1% by weight of Irganox® 1010;
- 0.1% by weight of Irgafos® 168;
- 0.04% by weight of DHT-4A (hydrotalcite).

The said Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos® 168 is tris(2,4-di-tert.-butylphenyl)phosphite.

The per cent amounts are referred to the total weight of the polymer and stabilizing additive composition.

The features reported in Table II are obtained from measurements carried out on the so extruded polymer, which constitutes the stabilized precursor ethylene polymer composition.

### Examples 3 to 5

The stabilized precursor ethylene polymer compositions prepared as described above (hereinafter called "SPEP"), are reacted by extrusion under the previously described conditions with a peroxydicarbonate in the amounts reported in Table III, which amounts are referred to the to the total weight of the polymer and peroxydicarbonate.

The peroxydicarbonate used is Perkadox 24, sold by Akzo, which is dicetyl peroxydicarbonate.

The properties of the so obtained final composition are reported in Table III.

By comparison with the properties of the respective SPEPs of Examples 1 and 2 (Table II), it is evident that an increase of strength at break and a decrease of compression set is achieved. In Examples 4 and 5 also the elongation at break is remarkably increased.

Moreover the ethylene polymer compositions are still thermoplastic, as shown by the Melt Flow Rate values.

It is to be considered that the comonomer contents are obviously the same as for the respective SPEPs. Also the Tm and density values are not sensibly different from those of the respective SPEPs.

**Table I**

| Example No. | | 1 | 2 |
|---|---|---|---|
| **1^{st} Reactor (component A))** | | | |
| Temperature | °C | 75 | 75 |
| Pressure | barg | 20 | 20 |
| H2/C2- | mol. | 0.55 | 0.5 |
| C3-/(C3-+C2-) | mol. | 0.022 | 0.023 |
| C4-/(C4-+C2-) | mol. | 0.058 | 0.05 |
| Split | wt% | 64 | 36 |
| Xylene soluble (XS_{A}) | wt% | 5.5 | - |
| MFR of A) | g/10 min. | 7.5 | 7.0 |
| Density of A) | g/cm³ | 0.930 | 0.931 |
| C4- content of A) | wt % | 3.5 | 4.6 |
| C3- content of A) | wt% | 3.4 | 3.7 |

| **2^{nd} Reactor (component B))** | | | |
|---|---|---|---|
| Temperature | °C | 65 | 65 |
| Pressure | barg | 20 | 20 |
| H2/C2- | mol. | 0.19 | 0.14 |
| C2-/(C2-+C3-) | mol. | 0.42 | 0.46 |
| Split | wt% | 36 | 64 |
| C2- content of B) | wt% | 65 | 65 |
| Xylene soluble of B) (XS_{B}) | wt% | 70 | 70 |
| Intrinsic Viscosity of XS_{B} | dl/g | 2.6 | 3.1 |

| | | | |
|---|---|---|---|
| Notes: C3- = propylene; C2- = ethylene; C4- = butene-1; split = amount of polymer produced in the concerned reactor. | | | |

**Table II**

| Example No. | | 1 | 2 |
|---|---|---|---|
| eta (0.01) | Pa.s | 10306 | 30650 |
| eta (100) | Pa.s | 1513 | 2109 |
| ΔH_{fus} | J/g | 87.4 | 67.3 |
| Tm | °C | 123.7 | 123.5 |
| MFR | g/10 min. | 2.1 | 0.85 |
| Xylene soluble (XS_{TOT}) | wt% | 34.6 | 47.7 |
| Intrinsic Viscosity of XS_{TOT} | dl/g | 2.6 | 2.9 |
| Total C4- content* | wt% | 2.2 | 1.7 |
| Total C3- content | wt% | 14.8 | 23.7 |
| Flexural Modulus | MPa | 205 | 100 |
| Tensile Strength at break | MPa | 7.4 | 5.2 |
| Elongation at break | % | 760 | 509 |
| Compression set at 23°C | % | 56 | 54 |
| Compression set at 70°C | % | 67 | 66 |

| | | | |
|---|---|---|---|
| Notes: C3- = propylene; C4- = butene-1 (estimated*) | | | |

**Table III**

| Example No. | | 3 | 4 | 5 |
|---|---|---|---|---|
| SPEP of Example | | 1 | 2 | 2 |
| Peroxydicarbonate amount | wt% | 0.4 | 0.3 | 0.5 |
| eta (0.01) | Pa.s | 42060 | 82650 | 108300 |
| eta (100) | Pa.s | 1619 | 2146 | 2179 |
| MFR | g/10 min. | 0.71 | 0.29 | 0.22 |
| Flexural Modulus | MPa | 178 | 92 | 99 |
| Tensile Strength at break | MPa | 8.2 | 6.9 | 7.9 |
| Elongation at break | % | 722 | 748 | 780 |
| Compression set at 23°C | % | 50 | 50 | 48 |
| Compression set at 70°C | % | 60 | 64 | 57 |

## Claims

1. An ethylene polymer composition having an eta (0.01) equal to or higher than 35,000 Pa.s and comprising, all per cent amounts being by weight:
A) 25-75% of an ethylene polymer selected from (A₁) ethylene homopolymers, (A₂) copolymers of ethylene with one or more olefin comonomers, wherein the comonomer content is of 10% or less with respect to the weight of the copolymer, and mixtures of homopolymers (A₁) and copolymers (A₂);
B) 25-75% of a copolymer of ethylene and propylene containing from 45% to 70% of ethylene;
wherein eta (0.01) is the complex shear viscosity at an angular frequency of 0.01 rad/s, measured with dynamic oscillatory shear in a plate-plate rotational rheometer at a temperature of 200°C, and the amounts of A) and B) are referred to the total weight of A) + B).

2. The ethylene polymer composition of claim 1, wherein the copolymers (A₂) are copolymers of ethylene with one or more comonomers selected from olefins having formula CH₂=CHR wherein R is an alkyl radical, linear or branched, having from 1 to 10 carbon atoms.

3. The ethylene polymer composition of claim 1, wherein the ethylene polymer A) has a density of from 0.920 to 0.960 g/cm³, determined according to ISO 1183 at 23°C.

4. The ethylene polymer composition of claim 1, showing a melting peak at a temperature Tm of 120°C or higher, measured by Differential Scanning Calorimetry with a heating rate of 20°C per minute.

5. The ethylene polymer composition of claim 1, having a MFR value of 0.1 to 3 g/10 min., determined according to ISO 1133 at 230°C with a load of 2.16 kg.

6. The ethylene polymer composition of claim 1, obtainable by reacting:
I) a precursor ethylene polymer composition having an eta (0.01) of lower than 35,000 Pa.s and comprising, all per cent amounts being by weight:
A) 25-75% of an ethylene polymer selected from (A₁) ethylene homopolymers, (A₂) copolymers of ethylene with one or more olefin comonomers, wherein the comonomer content is of 10% or less with respect to the weight of the copolymer, and mixtures of homopolymers (A₁) and copolymers (A₂);
B) 25-75% of a copolymer of ethylene and propylene containing from 45% to 70% of ethylene;
the amounts of A) and B) being referred to the total weight of A) + B); and
II) a radical initiator.

7. The ethylene polymer composition of claim 6, obtainable by using a radical initiator selected from peroxydicarbonates.

8. A process for preparing the ethylene polymer composition of claim 1, comprising the following stages:
i) preparing a precursor ethylene polymer composition having an eta (0.01) of lower than 35,000 Pa.s and comprising, all per cent amounts being by weight:
A) 25-75% of an ethylene polymer selected from (A₁) ethylene homopolymers, (A₂) copolymers of ethylene with one or more olefin comonomers, wherein the comonomer content is of 10% or less with respect to the weight of the copolymer, and mixtures of homopolymers (A₁) and copolymers (A₂);
B) 25-75% of a copolymer of ethylene and propylene containing from 45% to 70% of ethylene;
the amounts of A) and B) being referred to the total weight of A) + B), by polymerizing the monomers in at least two sequential steps, wherein components A) and B) are prepared in sequential steps, operating in each step in the presence of the polymer formed and the catalyst used in the preceding step; and
ii) subjecting the precursor composition obtained in i) to reaction with a radical initiator.

9. Formed articles comprising the polyolefin composition of claim 1.

10. Formed articles according to claim 9, in form of extruded articles.

## Patentansprüche

1. Ethylenpolymerzusammensetzung mit einem eta (0,01) gleich oder größer als 35.000 Pa·s, und welche folgendes umfasst, wobei sich alle Prozentsätze auf das Gewicht beziehen:
A) 25-75 % eines Ethylenpolymers ausgewählt aus (A₁) Ethylenhomopolymeren, (A₂) Copolymeren von Ethylen mit einem oder mehreren Olefincomonomeren, wobei der Comonomergehalt 10 % oder weniger beträgt, bezogen auf das Gewicht des Copolymers, und Mischungen von Homopolymeren (A₁) und Copolymeren (A₂);
B) 25-75 % eines Copolymers von Ethylen und Propylen, das 45 % bis 70 % Ethylen enthält;
wobei eta (0,01) die komplexe Scherviskosität bei einer Winkelgeschwindigkeit von 0,01 rad/s ist, gemessen mit dynamischer oszillatorischer Scherung in einem Platte-Platte-Rotationsrheometer bei einer Temperatur von 200 °C, und wobei die Mengen von A) und B) sich auf das Gesamtgewicht von A) + B) beziehen.

2. Ethylenpolymerzusammensetzung nach Anspruch 1, wobei die Copolymere (A₂) Copolymere von Ethylen mit einem oder mehreren Comonomeren ausgewählt aus Olefinen mit der Formel CH₂=CHR sind, wobei R ein linearer oder verzweigter Alkylrest mit 1 bis 10 Kohlenstoffatomen ist.

3. Ethylenpolymerzusammensetzung nach Anspruch 1, wobei das Ethylenpolymer A) eine Dichte von 0,920 bis 0,960 g/cm³ aufweist, bestimmt gemäß ISO 1183 bei 23 °C.

4. Ethylenpolymerzusammensetzung nach Anspruch 1, die einen Schmelzpeak bei einer Temperatur Tm von 120 °C oder höher zeigt, gemessen mittels Differentialscanningkalorimetrie mit einer Heizrate von 20 °C pro Minute.

5. Ethylenpolymerzusammensetzung nach Anspruch 1 mit einem MFR-Wert von 0,1 bis 3 g/10 min., bestimmt gemäß ISO 1133 bei 230 °C unter einer Last von 2,16 kg.

6. Ethylenpolymerzusammensetzung nach Anspruch 1, die erhältlich ist durch Umsetzen von:
I) einer Vorläuferethylenpolymerzusammensetzung mit einem eta (0,01) kleiner als 35.000 Pa·s und welche folgendes umfasst, wobei sich alle Prozentsätze auf das Gewicht beziehen:
A) 25-75 % eines Ethylenpolymers ausgewählt aus (A₁) Ethylenhomopolymeren, (A₂) Copolymeren von Ethylen mit einem oder mehreren Olefincomonomeren, wobei der Comonomergehalt 10 % oder weniger beträgt, bezogen auf das Gewicht des Copolymers, und Mischungen von Homopolymeren (A₁) und Copolymeren (A₂);
B) 25-75 % eines Copolymers von Ethylen und Propylen, das 45 % bis 70 % Ethylen enthält;
wobei sich die Mengen von A) und B) auf das Gesamtgewicht von A) und B) beziehen; und
II) einen Radikalinitiator.

7. Ethylenpolymerzusammensetzung nach Anspruch 6, die durch Verwendung eines Radikalinitiators ausgewählt aus Peroxydicarbonaten erhältlich ist.

8. Verfahren zur Herstellung der Ethylenpolymerzusammensetzung nach Anspruch 1, das die folgenden Stufen umfasst:
i) Herstellung einer Vorläuferethylenpolymerzusammensetzung mit einem eta (0,01) kleiner als 35.000 Pa·s und welche folgendes umfasst, wobei sich alle Prozentsätze auf das Gewicht beziehen:
A) 25-75 % eines Ethylenpolymers ausgewählt aus (A₁) Ethylenhomopolymeren, (A₂) Copolymeren von Ethylen mit einem oder mehreren Olefincomonomeren, wobei der Comonomergehalt 10 % oder weniger beträgt, bezogen auf das Gewicht des Copolymers, und Mischungen von Homopolymeren (A₁) und Copolymeren (A₂);
B) 25-75 % eines Copolymers von Ethylen und Propylen, das 45 % bis 70 % Ethylen enthält;
wobei die Mengen von A) und B) sich auf das Gesamtgewicht von A) + B) beziehen, indem die Monomere in mindestens zwei aufeinander folgenden Schritten polymerisiert werden, wobei Komponenten A) und B) in aufeinander folgenden Schritten hergestellt werden, wobei in jedem Schritt in Gegenwart des Polymers, das in dem vorhergehenden Schritt gebildet wurde, und des Katalysators, der in dem vorhergehenden Schritt verwendet wurde, gearbeitet wird; und
ii) die in i) erhaltene Voräuferzusammensetzung Reaktion mit einem Radikalinitiator unterzogen wird.

9. Formartikel, umfassend die Polyolefinzusammensetzung gemäß Anspruch 1.

10. Formartikel nach Anspruch 9 in Form von extrudierten Artikeln.

## Revendications

1. Composition de polymère d'éthylène ayant un êta (0,01) supérieur ou égal à 35 000 Pa.s et comprenant, toutes les quantités en pourcentage étant en poids :
A) 25-75 % d'un polymère d'éthylène choisi parmi (A₁) des homopolymères d'éthylène, (A₂) des copolymères d'éthylène avec un ou plusieurs comonomères d'oléfine, la teneur en comonomère étant de 10 % ou moins par rapport au poids du copolymère, et des mélanges d'homopolymères (A₁) et de copolymères (A₂) ;
B) 25-75 % d'un copolymère d'éthylène et de propylène contenant de 45 % à 70 % d'éthylène ;
dans laquelle êta (0,01) est la viscosité de cisaillement complexe à une fréquence angulaire de 0,01 rad/s, mesurée avec un cisaillement oscillatoire dynamique dans un rhéomètre rotatif plaque-plaque à une température de 200 °C, et les quantités de A) et B) se rapportent au poids total de A) + B).

2. Composition de polymère d'éthylène selon la revendication 1, dans laquelle les copolymères (A₂) sont des copolymères d'éthylène avec un ou plusieurs comonomères choisis parmi les oléfines ayant la formule CH₂=CHR dans laquelle R est un radical alkyle, linéaire ou ramifié, ayant de 1 à 10 atomes de carbone.

3. Composition de polymère d'éthylène selon la revendication 1, dans laquelle le polymère d'éthylène A) a une masse volumique allant de 0,920 à 0,960 g/cm³, déterminée selon la norme ISO 1183 à 23 °C.

4. Composition de polymère d'éthylène selon la revendication 1, présentant un pic de fusion à une température Tm de 120 °C ou plus, mesuré par Calorimétrie Différentielle à Balayage avec une vitesse de chauffage de 20 °C par minute.

5. Composition de polymère d'éthylène selon la revendication 1, ayant une valeur de MFR de 0,1 à 3 g/10 min, déterminée selon la norme ISO 1133 à 230 °C avec une charge de 2,16 kg.

6. Composition de polymère d'éthylène selon la revendication 1, pouvant être obtenue par réaction de :
I) une composition de polymère d'éthylène précurseur ayant un êta (0,01) inférieur à 35 000 Pa.s et comprenant, toutes les quantités en pourcentage étant en poids :
A) 25-75 % d'un polymère d'éthylène choisi parmi (A₁) des homopolymères d'éthylène, (A₂) des copolymères d'éthylène avec un ou plusieurs comonomères d'oléfine, la teneur en comonomère étant de 10 % ou moins par rapport au poids du copolymère, et des mélanges d'homopolymères (A₁) et de copolymères (A₂) ;
B) 25-75 % d'un copolymère d'éthylène et de propylène contenant de 45 % à 70 % d'éthylène ;
les quantités de A) et B) se rapportant au poids total de A) + B) ; et
II) un initiateur radicalaire.

7. Composition de polymère d'éthylène selon la revendication 6, pouvant être obtenue par utilisation d'un initiateur radicalaire choisi parmi les peroxydicarbonates.

8. Procédé de préparation de la composition de polymère d'éthylène selon la revendication 1, comprenant les étapes suivantes :
i) préparer une composition de polymère d'éthylène précurseur ayant un êta (0,01) inférieur à 35 000 Pa.s et comprenant, toutes les quantités en pourcentage étant en poids :
A) 25-75 % d'un polymère d'éthylène choisi parmi (A₁) des homopolymères d'éthylène, (A₂) des copolymères d'éthylène avec un ou plusieurs comonomères d'oléfine, la teneur en comonomère étant de 10 % ou moins par rapport au poids du copolymère, et des mélanges d'homopolymères (A₁) et de copolymères (A₂) ;
B) 25-75 % d'un copolymère d'éthylène et de propylène contenant de 45 % à 70 % d'éthylène ;
les quantités de A) et B) se rapportant au poids total de A) + B), par polymérisation des monomères dans au moins deux étapes séquentielles, les composants A) et B) étant préparés dans des étapes séquentielles, fonctionnant dans chaque étape en présence du polymère formé et du catalyseur utilisé dans l'étape précédente ; et
ii) soumettre la composition précurseur obtenue en i) à une réaction avec un initiateur radicalaire.

9. Articles formés comprenant la composition de polyoléfine selon la revendication 1.

10. Articles formés selon la revendication 9, sous forme d'articles extrudés.
